# EUROPÄISCHE PATENTSCHRIFT

(11) **EP 2 512 765 B1**
(45) Veröffentlichungstag und Bekanntmachung des Hinweises auf die Patenterteilung: **09.10.2013**
(21) Anmeldenummer: 10790541.6
(22) Anmeldetag: 07.12.2010
(51) Int. Cl.: B29C 33/12, B29C 70/54, B29L 31/30

(54) **VORRICHTUNG ZUR HERSTELLUNG EINER AUS FASERVERBUNDWERKSTOFF BESTEHENDEN RUMPFSCHALE FÜR EIN LUFTFAHRZEUG**
DEVICE FOR PRODUCING A FUSELAGE SHELL MADE OF FIBER COMPOSITE MATERIAL FOR AN AIRCRAFT
DISPOSITIF DE FABRICATION D'UN FUSELAGE CONSTITUÉ D'UN MATÉRIAU RENFORCÉ PAR DES FIBRES POUR UN AÉRONEF

(30) Priorität: 18.12.2009 DE 102009059720; 18.12.2009 US 287855 P
(43) Veröffentlichungstag der Anmeldung: 24.10.2012
(73) Patentinhaber: Airbus Operations GmbH, 21129 Hamburg (DE)
(72) Erfinder: BARLAG, Carsten, 26441 Jever (DE); PIEPENBROCK, Joachim, 21614 Buxtehude (DE)
(74) Vertreter: Maiwald Patentanwalts GmbH
(86) Internationale Anmeldenummer: PCT/EP2010/069056
(87) Internationale Veröffentlichungsnummer: WO 2011/073056

(56) Entgegenhaltungen:
- DE-A1- 10 331 358
- US-A1- 2006 108 058

## Beschreibung

### GEBIET DER ERFINDUNG

Die Erfindung betrifft eine Vorrichtung zur Herstellung einer aus einem Faserverbundwerkstoff bestehenden Rumpfschale für ein Luftfahrzeug, die zur Verstärkung mit mehreren beabstandet zueinander angeordneten Stringern zu versehen ist, umfassend ein Grundgerüst zur Bildung eines tragfähigen Unterbaus mit einer nach außen gewölbten Montagefläche zur Positiv-Aufrüstung, welche mit längs verlaufenden Montagenutmulden zur formschlüssigen Aufnahme von Formstücken für ein entformbares Positionieren der Stringer relativ zur Montagefläche versehen ist.

Das Einsatzgebiet der vorliegenden Erfindung erstreckt sich vornehmlich auf den Flugzeugbau. Insbesondere Verkehrs- oder Transportfahrzeuge mit großvolumige Rümpfen werden gewöhnlich in Schalenbauweise, insbesondere Halbschalenbauweise gefertigt. Bei der Schalenbauweise ergeben mehrere in Umfangsrichtung zusammengefügte Schalen einen nahezu runden oder ovalen Querschnitt eines Rumpfabschnittes. Mehrere Rumpfabschnitte hintereinander - für Heck, Rumpfmitte und Cockpit-Sektion - ergeben den vollständig geschlossenen Flugzeugrumpf. Vermehrt kommen zur Herstellung von Flugzeugrümpfen Faserverbundwerkstoffe, wie glasfaser- oder kohlenfaserverstärkte Kunststoffe, zum Einsatz. Um den Rumpf zu versteifen und die Lasten aufnehmen zu können, werden die Schalen üblicherweise mit meist längs verlaufenden Versteifungselementen ausgerüstet, beispielsweise sogenannten T- oder Ω-Stringer.

### HINTERGRUND DER ERFINDUNG

Gemäß des allgemein bekannten Standes der Technik lassen sich Schalen zur Herstellung des Flugzeugrumpfes in einer Negativklebeform herstellen, die als Laminier-Klebe-Vorrichtung (LKV) bezeichnet wird. In diese Negativ-Klebeform werden Fasermaterial und Harz in mehreren Schichten eingebracht und ausgehärtet. Auf oder innerhalb des Schichtaufbaus werden auch die Stringer integriert. Die LKV gibt dem Bauteil die gewünschte Außenkontur. Nach dem Entformen erfolgt oft eine spanende Nachbearbeitung, ehe ein Zusammenbau der so modellierten Schalen durchgeführt werden kann.

Aus der DE 103 31 358 A1 geht eine spezielle Vorrichtung für eine serienmäßige Herstellung einer aus Faserverbundwerkstoffen bestehenden Rumpfschale für ein Luftfahrzeug hervor. Auf einem ebenen Basisträger ist ein Raster von mehreren Stützwänden unterschiedlicher Länge derart angeordnet, dass deren Enden in etwa einen Halbkreis bilden. Die Stützwände sind in durch den Halbkreis vorgegebenen Winkeln zum Basisträger angeordnet. An den den Halbkreis bildenden distalen Enden der Stützwände sind modulare Profile befestigt, welche die Zwischenräume zwischen den Stützwänden abdecken und deren äußeren Oberflächen als Montagefläche der Innenkontur des herzustellenden integralen Strukturbauteils im Negativ entsprechen.

Das Raster der Stützwände sowie die Teilung der modularen Profile sind dabei derart ausgebildet, dass der dazwischenliegende Fügespalt jeweils unter der Sollposition eines Stringers angeordnet ist. Somit wird der Fügespalt zur Positionierung des Stringers relativ zu der herzustellenden Rumpfschale genutzt. Eine zu der vorstehend beschriebenen Aufrüstvorrichtung (ARV) passende LKV wird nach Erstellung des kompletten Aufbaus der Schale sowie der Hilfsstoffe oberhalb der Montagefläche passgenau aufgelegt und die zuvor auf Vakuumfolie aufgebrachte umlaufende Siegelmasse derart vorverdichtet, dass eine vakuumdichte Versiegelung zwischen der Vakuumhaut und der LKV entsteht. Anschließend wird der Aufbau LKV-seitig evakuiert.

Die mit Stringern versehene Rumpfschale wird mit der zuvor beschriebenen Vorrichtung gefertigt, indem zunächst die äußeren Oberflächen der modularen Profile mit einer lose aufliegenden Folie abgedeckt werden. Anschließend wird der durch die Zwischenräume zwischen den Profilen gebildete Hohlraum evakuiert, so dass der Atmosphärendruck die Folie formtreu in die Profilnuten und Vertiefungen eindrückt. Danach können Hilfsstoffe auf die tiefgezogene Vakuumfolie abgelegt werden. In den von der Vakuumfolie bedeckten Profilnuten werden anschließend in langgestreckte Formstücke eingebettete Stringer eingelegt. Die langgestreckten Formstücke bilden dabei eine Art Adapter zur Formanpassung zwischen der Geometrie des Fügespalts in der Montagefläche und der Geometrie des zu verarbeitenden Stringers. Auf der von der Vakuumfolie bedeckten äußeren Oberfläche der modularen Profile des Montageträgers und der Stringer werden je nach Fertigungsverfahren alle Hautschichten aus Faserverbundwerkstoffen einzeln oder als Paket aufgelegt. Anschließend wird auf die Vakuumfolie eine Siegelmasse in optimierter Menge aufgetragen. Durch passgenaues Zusammenfahren des so vorbereiteten Aufbaus auf der ARV mit der hierzu korrespondierenden LKV wird die umliegende Siegelmasse derart verdichtet, dass eine vakuumdichte Versiegelung zwischen der besagten Vakuumfolie und der LKV entsteht. Um den Transfer des kompletten Aufbaus von der ARV in die LKV zu vollziehen, wird die Seite der ARV belüftet und anschließend LKV-seitig Vakuum gezogen. Dadurch wird der gesamte Aufbau mit Atmosphärendruck gegen die LKV gedrückt. Schließlich werden ARV und LKV auseinandergefahren und die LKV gedreht, um diese dann einem finalen Härtungsprozess zuzuführen.

Zwar kann mit den durchgehenden Formstücken zur Positionierung der T-Stringer relativ zur Montagefläche eine präzise Fertigung der verstärkten Rumpfschale erzielt werden, jedoch sind die langbauenden Formstücke recht schwer zu handhaben und aufwendig in der Fertigung. Zudem müssen die durchgehenden Formstücke vor jedem Einsatz arbeitsintensiv eingetrennt und gereinigt werden.

Die durchgehenden langgestreckten Formstücke sind relativ zu dem eine passende Montagenutmulde bildenden Fügespalt nicht justierbar, so dass die Fertigung der langgestreckten Formstücke unter Beachtung enger Toleranzen zu erfolgen hat. Dies erhöht den Fertigungsaufwand zusätzlich. Im Zusammenwirken mit der LKV ist darüber hinaus keine Nachführung der Stringer beim Transferprozess möglich. Für das Einfahren der ARV in die zugeordnete LKV ist ein Mindestabstand erforderlich, welcher eine Zustellbewegung der ARV im Zuge des Transferprozesses ARV zu LKV - also ein gezieltes Nachführen - erforderlich macht. Die bisher verwendeten langbauenden Formstücke für die T-Stringer weisen in den meisten Fällen durch gezielte lokale Aufdickungen des Hautlaminates für jeden Stringer eine andere Geometrie auf, so dass eine große Anzahl derartiger Formstück bereitzustellen ist, um die verschiedenen Stringervarianten zu verbauen.

Oft werden Fertigungsverfahren für Rumpfschalen mit so genannten harten Stringern angewendet.. Es kommen dabei Stringer aus Metall oder bereits ausgehärtetem Verbundmaterial zum Einsatz und insoweit nicht mehr. unausgehärtet verarbeitet werden.

Es ist daher die Aufgabe der vorliegenden Erfindung eine Vorrichtung zur Herstellung einer aus Faserverbundwerkstoffen bestehenden und mit harten Stringern versehenen Rumpfschale zu schaffen, deren Bestandteile sich einfach und präzise anfertigen lassen, und die eine hochgenaue reproduzierbare Serienfertigung von stringerverstärkten Rumpfschalen ermöglicht.

### ZUSAMMENFASSUNG DER ERFINDUNG

Die Aufgabe wird ausgehend von einer Vorrichtung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass in jede Montagenutmulde der Montagefläche mehrere beabstandet zueinander angeordnete kurzbauende Formstücke für Stringer angeordnet sind, die gegenüber der zugeordneten Montagenutmulde in Querrichtung Y über Justiermittel verstellbar sind und in Tiefenrichtung Z über Liftmittel zum Nachführen der Stringer in Richtung einer über die Montagefläche bringbaren LKV ausfahrbar sind.

Dank der erfindungsgemäßen Lösung müssen die Stringer nicht mehr über langbauende Formstücke in die Montagenutmulden eingelegt werden, sondern in durch die kurzbauenden Formstücke realisierten Positioniereinsätze, die sich nur über einen geringen Teil der Länge der Montagenutmulden erstrecken. Die kurzbauenden Formstücke werden über Führungsmittel an die Vorrichtung befestigt und verfügen über Anlageflächen zur Positionierung der Stringer. Diese Anlageflächen stehen vorzugsweise in der Montagenutmulde über, so dass die Querschnittsgeometrie der Montagenutmulde größer ist als die Querschnittsgeometrie des kurzbauenden Formstücks. Dadurch ergibt sich die Möglichkeit, dieses in Querrichtung zu justieren, ohne dass der Stringer die Wandung der Montagenutmulde berührt.

Damit besteht ein Hauptvorteil der erfindungsgemäßen Lösung darin, dass die Lage der Stringer individuell nachjustiert werden kann, um beispielsweise auf thermale oder chemische Schrumpfeffekte oder Vorrichtungstoleranzen zu reagieren. Außerdem kann die Fertigungstoleranz der Vorrichtung aufgeweitet werden, was eine einfachere Herstellung ermöglicht. Durch die erfindungsgemäße Lösung findet eine gezielte Führung des Stringers beim Transferprozess zur LKV, und damit in Richtung der Außenhaut statt. Es werden keine großbauenden massiven Formstücke mehr benötigt, sondern nur noch relativ kleine Positioniereinsätze, welche idealerweise auch als Gleichteile konzipiert werden können. Gleichzeitig ist hiermit ein gegenüber vorbekannten Lösungen weit verringerter Reinigungsaufwand im Betrieb verbunden.

Die erfindungsgemäße Vorrichtung eignet sich insbesondere für die Herstellung von Rumpfschalen, bei denen harte Stringer auf eine klebenasse Außenhaut aufgeklebt werden sollen. Eine vollständig formgebende Ummantelung der T-Stringer ist nicht mehr notwendig. Es bleibt jedoch nach wie vor der Bedarf einer Positionierung, die unter anderem auch die Hinterschnittproblematik löst. Daher ist auch zu beachten, dass die mit den Stringern zusammenwirkenden kurzbauenden Formstücke mit hinreichenden Entformschrägen versehen sind. Durch die Entformschrägen wird der T-Stringer dann in gleicher Weise wie Stringer mit anderen Querschnitten, insbesondere Ω-stringer, in den Formstücken gehalten. Ω-Stringer werden zur Positionierung direkt in die Montagenutmulden, also ohne kurzbauende Formstücke, eingelegt.

Die den Kern der vorliegenden Erfindung bildenden kurzbauenden Formstücke bestehen vorzugsweise überwiegend aus Metall und sind spanend gefertigt, um die erfindungsgegenständlichen Funktionen im Zusammenwirken mit der Montagenutmulde sowie dem Stringer durch entsprechende Formgebung zu erfüllen. Ganz vorzugsweise bestehen die kurzbauenden Formstücke zumindest teilweise aus einem magnetischen Material, wie Stahl, um eine magnetische Fixierung innerhalb der Montagenutmulde zu realisieren. Insoweit wird vorgeschlagen, seitens der Montagenutmulde ein Magnetelement zu platzieren, das durch magnetische Krafteinwirkung auf das kurzbauende Formstück die gewünschte kraftschlüssige Fixierung erzeugt. Als Magnetelement eignet sich vorzugsweise ein Permanentmagnet. Es ist jedoch auch möglich, das Magnetelement als Elektromagnet mit zu oder abschaltbarem Magnetfeld auszuführen, um insoweit das Lösen des kurzbauenden Formstücks aus der Montagenutmulde zu erleichtern.

Zum geeignet formschlüssigen Zusammenwirken des kurzbauenden Formstücks mit dem T-Stringer wird vorgeschlagen, in das kurzbauende Formstück eine Längsnut einzubringen, welche vorzugsweise parallele Nutflanken aufweisen sollte. Die Nuttiefe der Längsnut ist dabei an die Länge eines Hauptabschnitts (Steg) des T-Stringers angepasst. Der T-Stringer besteht aus diesem Hauptabschnitt (Steg), der gewöhnlich eine höhere Wandstärke aufweist, als ein sich hieran anschließender Querabschnitt (Stringerfuß), welcher klebend mit der Außenhaut der herzustellenden Rumpfschale verbunden wird.

Durch Einstecken des Hauptabschnitts in die Längsnut wird der T-Stringer auf einfache Weise korrekt positioniert. Gemäß einer das Zusammenwirken zwischen T-Stringer und der Längsnut des Formstücks verbessernden Maßnahme wird vorgeschlagen, dass dazwischen ein zusätzliches Klemmmittel angeordnet ist, das zum kraftschlüssigen Fixieren des T-Stringers in der Längsnut dient. Dieses Klemmmittel ist vorzugsweise als eine elastische Einlagematte ausgebildet, die aus einem kleinporigen Elastomerschaumstoffmaterial oder dergleichen bestehen kann und neben der erwünschten Klemmwirkung entsprechend eines zusätzlichen Vorteils auch einen Toleranzausgleich zwischen der Geometrie des T-Stringers sowie der Vorrichtung sorgt.

Die Justiermittel zum Verstellen des Formstücks in Querrichtung relativ zur Montagenutmulde können in einfacher Weise als beidseits der Nutmuldenflanken angeordnete Justierplatten ausgebildet werden. Durch die Auswahl geeignet dicker Justierplatten und deren Anbringung zwischen Montagenutmulde und Formstück lassen sich in einfacher Weise alle denkbaren Positionen des Formstücks in Querrichtung innerhalb der Montagenutmulde realisieren. Alternativ hierzu ist es jedoch auch denkbar, die Justiermittel als beidseits der Nutmuldenflanken angeordnete Buchseneinheiten/Führungseinheiten oder dergleichen auszubilden.

Zum Einfahren der ARV in die zugeordnete LKV ist es bei stärker gekrümmten Rumpfschalen notwendig, die ARV geringfügig kleiner auszulegen, damit es nicht zu Reibungen an den äußeren Flanken kommt. Diesen Weg muss der Stringer also zurücklegen, um an seine Endposition auf der Außenhaut zu gelangen. Wird der Stringer dabei nicht geführt, so geschieht dies willkürlich. Die umschlagene Vakuumfolie nimmt den Stringer dann einfach ungeführt mit. Inwieweit dies die Position des Stringers beeinflussen kann, lässt sich in der Praxis schwer abschätzen, aber mit zunehmendem Abstand zwischen ARV und LKV ist davon auszugehen, dass die Ungenauigkeiten größer werden. Um dies zu verhindern, sollte der Stringer gezielt nachgeführt werden. Hierzu befinden sich unterhalb der kurzbauenden Formstücke Liftmittel zum Nachführen während des Transferprozesses von ARV zu LKV.

Die Liftmittel zum Nachführen der Stringer in Richtung LKV können auf verschiedene Weise ausgebildet sein. Hierzu genügen Druckfedern zum passiven Anheben des Formstücks relativ zur Montagenutmulde. Die Druckfedern können dabei allein durch das Prozessvakuum in der eingefahrenen Stellung gehalten werden. Beim späteren Transferprozess von ARV zu LKV findet ein Druckausgleich zwischen den beiden Vorrichtungen statt, wodurch die Formstücke durch die Druckfedern in Richtung der LKV aus der ARV herausgedrückt werden. Somit sind zusätzliche Aktuatoren zum Einfahren der Druckfedern und damit des Formstücks entbehrlich. Sollten allerdings zusätzliche Aktuatoren als Liftmittel zum Nachführen der Stringer in Richtung LKV gewünscht sein, so bietet es sich an, diese in Form von Druckmittelzylindern zum Anheben der Formstücke auszuführen. Mit diesen Aktuatoren kann der Positioniereinsatz dann bei Bedarf, beispielsweise im Falle eines Hinterschnittes, auch wieder eingefahren werden.

Gemäß einer die Erfindung weiter verbessernden Maßnahme wird vorgeschlagen, dass die Formstücke zur Vermeidung entformungshindernder Hinterschnitte zumindest teilweise nach radial innen bewegbar sind. Denn überschreitet die Rumpfschale einen gewissen Öffnungswinkel, kann es zu derart hinderlichen Hinterschnitten kommen, durch welche eine Entformung aus der ARV nach der Übergabe an die LKV nicht mehr möglich ist. Die Größe dieses Grenzöffnungswinkels ist abhängig von der Geometrie des Stringers, also des Ω-Stringers selbst bzw. dem T-Stringer inklusive Positionierstück. Der Hinterschnitt tritt an den äußeren Stringern auf. Um eine Entformung trotzdem möglich zu machen, können die Positioniereinsätze nach innen in die Vorrichtung zurückgezogen werden. Sind mehrere Stringer vom entformungshindernden Hinterschnitt betroffen, so können die jeweiligen kurzbauenden Formstücke auch in einem gemeinsamen Gurt zusammengefasst werden, der dann die Formstücke zusammen zurückführt. Dabei ist jedoch zu beachten, dass ein Teil des Querschnitts der Montagenutmulde in Entformungsrichtung freigeschnitten sein muss.

### KURZE BESCHREIBUNG DER ZEICHNUNGEN

Weitere, die Erfindung verbessernden Maßnahmen werden nachstehend gemeinsam mit der Beschreibung eines bevorzugten Ausführungsbeispiels der Erfindung anhand der Figuren näher dargestellt. Es zeigt:
- Figur 1: eine perspektivische Ansicht auf die Montagefläche einer Vorrichtung zur Herstellung von aus Faserverbundwerkstoff bestehenden Rumpfschalen,
- Figur 2: einen Querschnitt im Bereich einer exemplarischen Montagenutmulde der Vorrichtung gemäß Figur 1,
- Figur 3: eine perspektivische Darstellung eines kurzbauenden Formstücks für die Montagenutmulde gemäß Figur 2,
- Figur 4: eine perspektivische Darstellung eines in ein kurzbauendes Formstück eingelegten T-Stringers.

Alle Figuren sind schematisch.

### DETAILLIERTE BESCHREIBUNG DES AUSFÜHRUNGSBEISPIELS

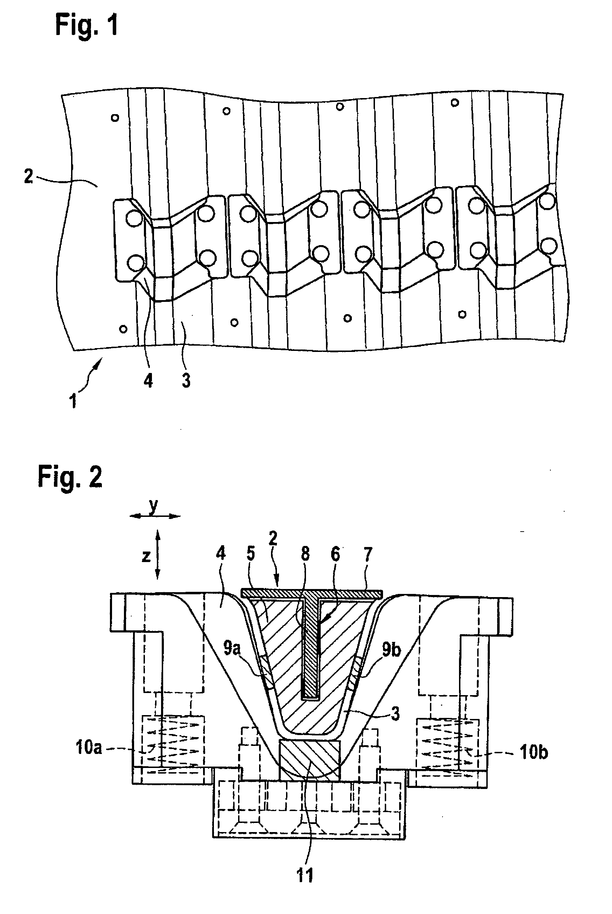

Gemäß Figur 1 besitzt die Vorrichtung zur Herstellung der hier nicht weiter dargestellten Rumpfschalen für ein Luftfahrzeug im Wesentlichen aus einem Grundgerüst 1, das unterhalb einer Montagefläche 2 zur Bildung eines tragfähigen Unterbaus angeordnet ist. Die nach außen gewölbte Montagefläche 2 dient der Positiv-Aufrüstung und umfasst mehrere parallel zueinander verlaufende Montagenutmulden 3 zur Aufnahme von - hier nicht dargestellten Formstücken zum Einlegen von Stringern. An der Stelle, an welcher die Formstücke in die Montagemulde 3 eingelegt werden, sind Positioniereinsätze 4 vorhanden, welche über Liftmittel anhebbar sind, um die später hierin eingesetzten Stringer in Richtung einer über der Montagefläche 2 bringbaren Laminier-Klebe-Einheit (LKV) anzuheben.

Nach Figur 2 ist in die durch den Positioniereinsatz 4 gebildeten Montagenutmulde 3 ein kurzbauendes Formstück 5 (exemplarisch) eingelegt. Entlang der Längserstreckung jeder Montagenutmulde 3 der Vorrichtung sind mehrere derartiger kurzbauender Formstücke 5 beabstandet voneinander platziert, um über eine seitens der Montagefläche 2 zugängliche Längsnut 6 einen T-Stringer 7 über dessen Hauptabschnitt 8 aufzunehmen.

Jedes Formstück 5 ist gegenüber der zugeordneten Montagenutmulde 3 in Querrichtung Y über Justiermittel verstellbar, welche in diesem Ausführungsbeispiel als beidseits der Nutmuldenflanken angeordnete Justierplatten 9a, 9b ausgebildet sind. Durch Auswahl der Dicke der Justierplatten 9a und 9b wird ein Toleranzausgleich zwischen der Vorrichtung und der Sollposition des Stringers 7 vorgenommen.

Zum vorstehend erwähnten Nachführen des Stringers 7 in Tiefenrichtung Z sind Liftmittel vorgesehen, welche in diesem Ausführungsbeispiel als Druckfedern 10a und 10b ausgeführt sind. Die Druckfedern 10a und 10b sind beidseits der Montagenutmulde 3 platziert und wirken zwischen dem - hier nicht weiter dargestellten - Grundgerüst und dem Positioniereinsatz 4. Die Druckfedern 10a und 10b werden durch das Prozessvakuum in der eingefahrenen Stellung gehalten.

Das aus einem magnetischen Material bestehende kurzbauende Formstück 5 ist kraftschlüssig innerhalb der Montagenutmulde 3a fixiert. Dies erfolgt über ein seitens der Montagenutmulde 3 angeordnetes Magnetelement 11, welches als Permanentmagnet ausgebildet ist.

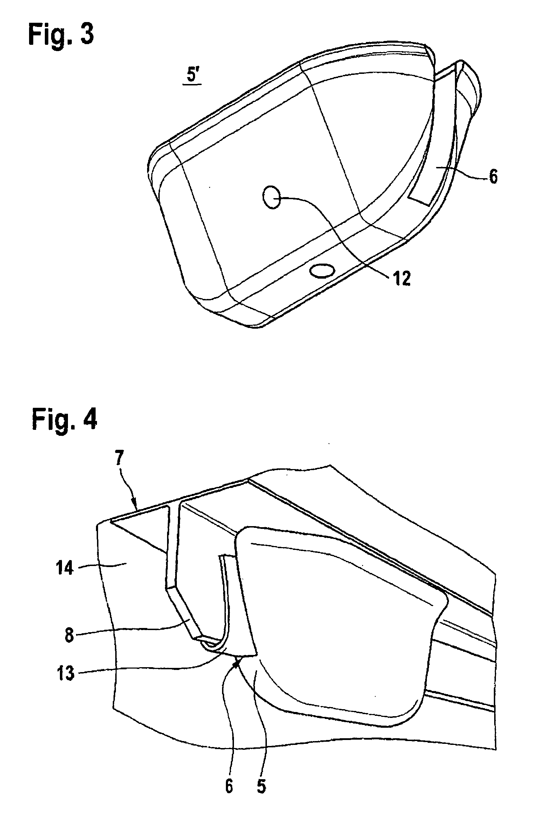

Das in Figur 3 dargestellte kurzbauende Formstück 5 besteht aus Stahl als magnetisches Material und wird durch überwiegend spanende Bearbeitung in die dargestellte Form gebracht. Dabei ist die Längsnut 6 durch Fräsen erzeugt worden. Im Bereich des mit der - hier nicht dargestellten - Montagenutmulde zusammenwirkenden Bereichs ist bei dieser Ausführungsform des kurzbauenden Formstücks 5' eine - nur angedeutete - Buchseneinheit 12 als Justiermittel in Querrichtung vorgesehen.

In Figur 4 ist die relative Positionierung des Stringers 7 zu dem zugeordneten kurzbauenden Formstück 5 außerhalb der übrigen Bestandteile der Vorrichtung illustriert. Zwischen der Längsnut 6 des Formstücks 5 und dem Hauptabschnitt 8 des Stringers 7 ist ein Klemmmittel zum Fixieren des hier als T-Stringer ausgebildeten Stringers 7 in der Längsnut 6 vorgesehen.

Das Klemmmittel ist hier als eine elastische Einlegematte 13 ausgebildet, die aus einem kleinporigen Elastomermaterial besteht und neben der Klemmwirkung auch zum Toleranzausgleich beiträgt.

In dieser Position wird der Stringer 7 mit einer darüber nur schematisch dargestellten durch mehrere Lagen gebildeten Rumpfschale 14 aus Faserverbundwerkstoff durch Kleben mit Epoxidharz stoffschlüssig verbunden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Grundgerüst
- 2: Montagefläche
- 3: Montagenutmulde
- 4: Positioniereinsatz
- 5: Formstück
- 6: Längsnut
- 7: Stringer
- 8: Hauptabschnitt
- 9: Justierplatte
- 10: Druckfeder
- 11: Magnetelement
- 12: Buchseneinheit
- 13: Einlagematte
- 14: Rumpfschale

- Y: Querrichtung
- Z: Tiefenrichtung

## Patentansprüche

1. Vorrichtung zur Herstellung einer aus Faserverbundwerkstoff bestehenden Rumpfschale (14) für ein Luftfahrzeug, die zur Verstärkung mit mehreren beabstandet zueinander angeordneten Stringern (7) zu versehen ist, umfassend ein Grundgerüst (1) zur Bildung eines tragfähigen Unterbaus mit einer nach außen gewölbten Montagefläche (2) zur Positiv-Aufrüstung, welche mit längsverlaufenden Montagenutmulden (3) zur formschlüssigen Aufnahme von Formstücken (5) für ein entformbares Positionieren der Stringer (7) relativ zur Montagefläche (2) versehen ist,
**dadurch gekennzeichnet, dass** in jede Montagenutmulde (3) mehrere beabstandet zueinander angeordnete kurzbauende Formstücke (5) angeordnet sind, die gegenüber der zugeordneten Montagenutmulde (3) in Querrichtung (Y) über Justiermittel verstellbar sind, und in Tiefenrichtung (Z) über Liftmittel zum Nachführen der Stringer (7) in Richtung einer über die Montagefläche (2) bringbaren Laminier-Klebe-Einheit anhebbar sind.

2. Vorrichtung nach Anspruch 1,
**dadurch gekennzeichnet, dass** die kurzbauenden Formstücke (5) zumindest überwiegend aus Metall bestehend spanend gefertigt sind.

3. Vorrichtung nach Anspruch 1 oder 2,
**dadurch gekennzeichnet, dass** das kurzbauende Formstück (5) zumindest teilweise aus einem magnetischen Material besteht, um im Zusammenwirken mit einem zugeordneten und seitens der Montagenutmulde (3) angeordneten Magnetelement (11) eine kraftschlüssige Fixierung des Formstücks (5) innerhalb der Montagenutmulde (3) zu gewährleisten.

4. Vorrichtung nach Anspruch 1,
**dadurch gekennzeichnet, dass** das kurzbauende Formstück (5) zur Aufnahme eines T-Stringers (7) eine parallele Nutflanken aufweisende Längsnut (6) besitzt, deren Nuttiefe an die Länge eines Hauptabschnitts (8) des T-Stringers (7) angepasst ist.

5. Vorrichtung nach Anspruch 4,
**dadurch gekennzeichnet, dass** zwischen der Längsnut (6) des Formstücks (5) und dem Hauptabschnitt 0 des T-Stringers (7) ein Klemmmittel zum Fixieren des T-Stringers (7) in der Längsnut (6) angeordnet ist.

6. Vorrichtung nach Anspruch 5,
**dadurch gekennzeichnet, dass** das Klemmmittel als einer elastischen Einlagematte (13) besteht.

7. Vorrichtung nach Anspruch 1,
**dadurch gekennzeichnet, dass** die Justiermittel zum Verstellen des Formstücks (5) in Querrichtung (Y) relativ zur Montagenutmulde (3) als beidseits der Nutmuldenflanken angeordnete Justierplatten (9a, 9b) ausgebildet sind.

8. Vorrichtung nach Anspruch 1,
**dadurch gekennzeichnet, dass** die Justiermittel zum Verstellen des Formstücks (5) in Querrichtung relativ zur Montagenutmulde (3) als beidseits der Nutmuldenflanken angeordnete Buchseneinheiten (12) ausgebildet sind.

9. Vorrichtung nach Anspruch 1,
**dadurch gekennzeichnet, dass** die Liftmittel zum Nachführen der Stringer (7) in Richtung Laminier-Klebe-Einheit Druckfedern (10a, 10b) zum Anheben des Positioniereinsatzes (4) aus der Montagenutmulde (3) umfassen.

10. Vorrichtung nach Anspruch 9,
**dadurch gekennzeichnet, dass** die Druckfedern (10a, 10b) durch das Prozessvakuum in der eingefahrenen Stellung haltbar sind.

11. Vorrichtung nach Anspruch 1,
**dadurch gekennzeichnet, dass** die Liftmittel zum Nachführen der Stringer (7) in Richtung Laminier-Klebe-Einheit Druckmittelzylinder zum Anheben des Positioniereinsatzes (4) aus der Montagenutmulde (3) umfassen.

12. Vorrichtung nach einem der vorstehenden Ansprüche,
**dadurch gekennzeichnet, dass** die Positioniereinsätze (5) zur Vermeidung entformungshindernder Hinterschnitte zumindest teilweise von der gewölbten Montagefläche (2) nach Radialinnen bewegbar sind.

## Claims

1. Device for manufacturing a fuselage shell (14) consisting of fibre composite material for an aeroplane, which shell is provided with a plurality of stringers(7), arranged mutually spaced, for reinforcement, comprising a base frame (1) for forming a load-bearing substructure having an outwardly curved mounting face (2) for positive provision of equipment, which is provided with longitudinally extending mounting groove cavities (3) for positively receiving shaped parts (5) for deformably positioning the stringers (7) with respect to the mounting face (2),
**characterised in that** a plurality of short shaped parts (5), arranged mutually spaced, are arranged in each mounting groove cavity (3), and can be moved with respect to the mounting groove cavity (3) in the transverse direction (Y) by way of adjustment means, and in the vertical direction (Z) by way of lifting means for tracking the stringers (7) in the direction of a lamination adhesive unit which can be brought over the mounting face (2).

2. Device according to claim 1, **characterised in that** the short shaped pieces, consisting at least predominantly of metal, are manufactured by cutting.

3. Device according to either claim 1 or claim 2, **characterised in that** the short shaped part (5) consists at least in part of a magnetic material, so as to ensure non-positive fixing of the shaped part (5) within the mounting groove cavity (3), in cooperation with an associated magnet element (11) which is arranged alongside the mounting groove cavity (3).

4. Device according to claim 1, **characterised in that**, for receiving a T-stringer (7), the short shaped part (5) has a longitudinal groove (6) comprising parallel groove flanks, the depth of the groove being adapted to the length of a main portion (8) of the T-stringer (7).

5. Device according to claim 4, **characterised in that** a gripping means for fixing the T-stringer (7) in the longitudinal groove (6) is arranged between the longitudinal groove (6) of the shaped part (5) and the main portion (8) of the T-stringer (7).

6. Device according to claim 5, **characterised in that** the gripping means consists of a elastic inlay mat (13).

7. Device according to claim 1, **characterised in that** the adjustment means for moving the shaped part (5) in the transverse direction (Y) with respect to the mounting groove cavity (3) are formed as adjustment plates (9a, 9b) arranged on either side of the groove cavity flanks.

8. Device according to claim 1, **characterised in that** the adjustment means for moving the shaped part (5) in the transverse direction with respect to the mounting groove cavity (3) are formed as bushing units (12) arranged on either side of the groove cavity flanks.

9. Device according to claim 1, **characterised in that** the lifting means for tracking the stringer (7) in the direction of the lamination adhesive unit comprise compression springs (10a, 10b) for raising the positioning unit (4) out of the mounting groove cavity (3).

10. Device according to claim 9, **characterised in that** the compression springs (10a, 10b) can be held in the retracted position by the process vacuum.

11. Device according to claim 1, **characterised in that** the lifting means for tracking the stringers (7) in the direction of the lamination adhesive unit comprise pressure cylinders for raising the positioning unit (4) out of the mounting groove cavity (3).

12. Device according to any one of the preceding claims, **characterised in that** the positioning inserts (5) can be moved radially inwards at least in part from the curved mounting surface (2) so as to avoid undercuts which impede the deformation.

## Revendications

1. Dispositif de fabrication d'un fuselage (14) constitué d'un matériau renforcé par des fibres pour un aéronef, lequel fuselage est prévu pour son renforcement de plusieurs raidisseurs (7) disposés à une certaine distance les uns des autres, comprenant une structure de base (1) destinée à former une base porteuse dotée d'une surface de montage (2) incurvée vers l'extérieur en vue d'un montage positif, qui est pourvue de cavités à encoches de montage (3) s'étendant longitudinalement, destinées au logement par complémentarité de formes de pièces moulées (5) pour un positionnement démoulable des raidisseurs (7) par rapport à la surface de montage (2),
**caractérisé par le fait que** plusieurs pièces moulées (5) de faibles dimensions disposées à une certaine distance les unes des autres sont disposées dans chaque cavité à encoche de montage (3), lesdites pièces pouvant être déplacées par rapport à la cavité à encoche de montage (3) associée dans la direction transversale (Y) par l'intermédiaire de moyens d'alignement, et pouvant être soulevées dans le sens de la profondeur (Z) par l'intermédiaire de moyens de levage pour guider les raidisseurs (7) en direction d'une unité à stratifier et à coller pouvant être amenée au-dessus de la surface de montage (2).

2. Dispositif selon la revendication 1, **caractérisé par le fait que** les pièces moulées (5) de faibles dimensions constituées au moins majoritairement de métal sont usinées par enlèvement de copeaux.

3. Dispositif selon la revendication 1 ou 2, **caractérisé par le fait que** la pièce moulée (5) de faibles dimensions est constituée au moins partiellement d'un matériau magnétique, pour garantir, en coopération avec un élément magnétique (11) affecté et disposé du côté de la cavité à encoche de montage (3), une fixation par adhérence de la pièce moulée (5) à l'intérieur de la cavité à encoche de montage (3).

4. Dispositif selon la revendication 1, **caractérisé par le fait que** la pièce moulée (5) de faibles dimensions possède, pour le logement d'un raidisseur en T (7), une rainure longitudinale (6) présentant des rainures de flanc parallèles, dont la profondeur de rainure est adaptée à la longueur d'une section principale (8) du raidisseur en T (7).

5. Dispositif selon la revendication 4, **caractérisé par le fait qu'**un moyen de serrage pour fixer le raidisseur en T (7) dans la rainure longitudinale (6) est disposé entre la rainure longitudinale (6) de la pièce moulée (5) et la section principale (8) du raidisseur en T (7).

6. Dispositif selon la revendication 5, **caractérisé par le fait que** le moyen de serrage est constitué d'une nappe (13) élastique.

7. Dispositif selon la revendication 1, **caractérisé par le fait que** les moyens d'alignement pour déplacer la pièce moulée (5) dans la direction transversale (Y) par rapport à la cavité à encoche de montage (3) ont la forme de plaques d'alignement (9a, 9b) disposées de part et d'autre des flancs d'enfoncement de rainure.

8. Dispositif selon la revendication 1, **caractérisé par le fait que** les moyens d'alignement pour déplacer la pièce moulée (5) dans la direction transversale (Y) par rapport à la cavité à encoche de montage (3) ont la forme d'unités de douille (12) disposées de part et d'autre des flancs d'enfoncement de rainure.

9. Dispositif selon la revendication 1, **caractérisé par le fait que** les moyens de levage pour guider les raidisseurs (7) comprennent, dans la direction de l'unité à stratifier et à coller, des ressorts de compression (10a, 10b) pour relever le dispositif de positionnement (4) hors de la cavité à encoche de montage (3).

10. Dispositif selon la revendication 9, **caractérisé par le fait que** les ressorts de compression (10a, 10b) sont retenus par l'intermédiaire du vide de traitement dans leur position escamotée.

11. Dispositif selon la revendication 1, **caractérisé par le fait que** les moyens de levage pour guider les raidisseurs (7) comprennent, dans la direction de l'unité à stratifier et à coller, des vérins à fluide sous pression pour relever le dispositif de positionnement (4) hors de la cavité à encoche de montage (3).

12. Dispositif selon l'une quelconque des revendications précédentes, **caractérisé par le fait que** les dispositifs de positionnement (5) sont mobiles pour éviter des contre-dépouilles empêchant le démoulage au moins partiellement de la surface de montage incurvée (2) en direction radiale vers l'intérieur.
